# EUROPÄISCHE PATENTANMELDUNG

(11) **EP 4 674 550 A1**
(43) Veröffentlichungstag der Anmeldung: **07.01.2026**
(21) Anmeldenummer: 24186013.9
(22) Anmeldetag: 02.07.2024
(51) Int. Cl.: B23C 5/10

(54) **WERKZEUG ZUM FLÄCHIGEN ABTRAGEN VON MATERIAL AN EINER OBERFLÄCHE UND VERWENDUNG DES WERKZEUGS**

(71) Anmelder: Lehmann GmbH Präzisionswerkzeuge, 02633 Göda (DE)
(72) Erfinder: Lehmann, Roland, Göda (DE)
(74) Vertreter: Kailuweit & Uhlemann Patentanwälte Partnerschaft mbB

(57) **Zusammenfassung**

Die Erfindung betrifft ein Werkzeug (1) zum flächigen Abtragen von Material an einer Oberfläche aufweisend einen im Wesentlichen zylindrischen Grundkörper mit einer Drehachse (3) und einem Schaftabschnitt zum Einspannen des Werkzeugs in einer Bearbeitungsmaschine und einem dem Schaftabschnitt gegenüberliegenden Schneidabschnitt (2), wobei der Schneidabschnitt wenigstens zwei ausgehend von der Werkzeugachse symmetrisch angeordnete Bereiche aufweist, umfassend einen ersten, der Werkzeugachse ferner liegenden Abschnitt, im Randbereich des Schneidabschnitts, einen zweiten Abschnitt umfassend eine spanend arbeitende Frässchneide, sowie -einen dritten, der Werkzeugachse näher liegenden Abschnitt, welcher ausgehend vom zweiten Abschnitt konvex, radial abfallend zur Werkzeugachse ausgebildet ist.

## Beschreibung

Die Erfindung betrifft ein Werkzeug zum flächigen Abtragen von Material an einer Oberfläche.

Im Stand der Technik sind zahlreiche Werkzeuge zur Bearbeitung von Oberflächen, insbesondere zum flächigen Abtragen von Material an einer Oberfläche bekannt.

So offenbart die DE 10 2015 116 443 A1 einen Schlichtschaftfräser zum flächigen Abtragen von Material an einer Werkstückoberfläche und zum Glätten der Werkstückoberfläche in einer Fräsbewegung mit wenigstens einer spanend arbeitende Frässchneide und wenigstens einen spanlos arbeitenden Drücksteg. Jede Frässchneide erstreckt sich durchgehend und ohne Unterbrechungen auf einer um die Werkzeugachse rotationssymmetrischen Umfangsfläche über eine axiale Länge axial zur Werkzeugachse und ist so gestaltet, dass sie bei der Fräsbewegung über ihre gesamte axiale Länge mit einer zur Werkzeugachse radialen spanenden Eingriffstiefe Werkstückspäne von der Werkstückoberfläche abhebt.

Auch bekannt ist aus der DE 10 2019 214 040 A1 ein Fräswerkzeug mit einem zylindrischen, eine Mittelachse aufweisenden Schaftteil, an den sich ein zylindrischer Schneidteil mit zumindest drei wendelförmig verlaufenden und durch Spannuten (voneinander getrennten Umfangsschneiden anschließt. Die Umfangsschneiden setzen sich über Schneideneckbereiche in im Wesentlichen radial verlaufende Stirnschneiden fort, die im Anschluss von radial äußeren Stirnschneidabschnitten jeweils mit einem von eingeschliffenen Stirntaschen gebildeten Schneidenabschnitt zur Mittelachse von der Fräserstirn weg abfallen.

Ferner offenbart die DE 10 2022 120 755 A1 einen Schaftfräser mit Hohlstirn, aufweisend einen Schaftabschnitt, und einen Schneidabschnitt mit einer Stirnfläche und einer Umfangsfläche. An einer Stirnfläche ist eine von einem Außendurchmesser des Schneidabschnitts zu einer mittleren Längsachse verlaufende Stirnschneide mit einer an dieser anschließenden Freifläche ausgebildet. An einer Umfangsfläche ist eine Umfangsschneide mit einer an dieser anschließenden Umfangsfreifläche ausgebildet. Die an die Stirnschneide anschließende Freifläche ist als eine abgerundete, konvexe und geometrisch unbestimmte Fläche ausgebildet ist.

Die DE 20 2019 005 299 U1 beschreibt ein Fräswerkzeug mit einem im Wesentlichen zylindrischen Grundkörper mit einer Drehachse, mit einem bis zu einem ersten Ende des Fräswerkzeugs reichenden Schaftabschnitt zum Einspannen des Fräswerkzeugs in einer Bearbeitungsmaschine, mit einem bis zu dem anderen Ende des Fräswerkzeugs reichenden und einem dem Schaftabschnitt gegenüberliegenden Fräsabschnitt, mit einer Stirnseite bzw. Stirnfreifläche des Fräsabschnitts, die mindestens eine von der Drehachse zum Umfang verlaufende Stirnschneide aufweist, die in eine umfangseitig in einem Schraubengang verlaufende Frässchneide übergeht, mit einem der Drehachse näher liegenden, insbesondere bis zur Drehachse hin reichenden inneren Schneidenabschnitt der Stirnschneide und mit einem der Drehachse ferner liegenden, bis zum Umfang hin reichenden äußeren Schneidenabschnitt der Stirnschneide. Dabei fällt der der Drehachse näher liegenden inneren Schneidenabschnitt der Stirnschneide zur Drehachse (M) hin stärker ab als der äußere Schneidenabschnitt, wobei die inneren Schneidenabschnitte mehrerer Stirnschneiden im Bereich der Drehachse in einer Rundung oder in einem waagrechten Plateau ineinander übergehen.

Die bisher bekannten Werkzeuge zur Bearbeitung von Oberflächen erlauben bisher nicht, die schnelle Bearbeitung und die Erzielung einer angestrebten geringeren mittleren Rauigkeit (Rz).

Aufgabe ist es daher, ein Werkzeug bereitzustellen, welches die Nachteile des Standes der Technik überwindet.

Erfindungsgemäß wird die Aufgabe durch ein Werkzeug gemäß den unabhängigen Ansprüchen gelöst. Vorteilhafte Ausgestaltungen der Erfindung sind in den abhängigen Ansprüchen angegeben.

Ein erster Aspekt der Erfindung betrifft ein Werkzeug zum flächigen Abtragen von Material an einer Oberfläche, wobei das Werkzeug bestimmt ist zum flächigen Abtragen von Material an einer Werkstückoberfläche und zum Glätten und/oder Verdichten der Werkstückoberfläche in einer Bewegung durch Drehung um eine Werkzeugachse in einer vorgegebenen Drehrichtung bei gleichzeitigem Vorschub relativ zur Werkstückoberfläche, aufweisend einen im Wesentlichen zylindrischen Grundkörper mit einer Drehachse und einem Schaftabschnitt zum Einspannen des Werkzeugs in einer Bearbeitungsmaschine und einem dem Schaftabschnitt gegenüberliegenden Schneidabschnitt, wobei der Schneidabschnitt einen Bereich aufweist, umfassend
- einen ersten, der Werkzeugachse ferner liegenden Abschnitt, im Randbereich des Schneidabschnitts,
- einen zweiten Abschnitt umfassend eine spanend arbeitende Schneide, sowie
- einen dritten, der Werkzeugachse näher liegenden Abschnitt, welcher ausgehend vom zweiten Abschnitt konvex, radial abfallend zur Werkzeugachse ausgebildet ist.

In Ausführungsformen der Erfindung ist das Werkzeug bevorzugt als Einscheinder Fräser ausgebildet.

Ein weiterer Aspekt der Erfindung betrifft ein Werkzeug zum flächigen Abtragen von Material an einer Oberfläche, wobei das Werkzeug bestimmt ist zum flächigen Abtragen von Material an einer Werkstückoberfläche und zum Glätten und/oder Verdichten der Werkstückoberfläche in einer Bewegung durch Drehung um eine Werkzeugachse in einer vorgegebenen Drehrichtung bei gleichzeitigem Vorschub relativ zur Werkstückoberfläche, aufweisend einen im Wesentlichen zylindrischen Grundkörper mit einer Drehachse und einem Schaftabschnitt zum Einspannen des Werkzeugs in einer Bearbeitungsmaschine und einem dem Schaftabschnitt gegenüberliegenden Schneidabschnitt, wobei der Schneidabschnitt wenigstens zwei ausgehend von der Werkzeugachse symmetrisch angeordnete Bereiche aufweist, jeweils umfassend
- einen ersten, der Werkzeugachse ferner liegenden Abschnitt, im Randbereich des Schneidabschnitts,
- einen zweiten Abschnitt umfassend eine spanend arbeitende Schneide, sowie
- einen dritten, der Werkzeugachse näher liegenden Abschnitt, welcher ausgehend vom zweiten Abschnitt konvex, radial abfallend zur Werkzeugachse ausgebildet ist.

Ausgehend von der Werkzeugachse weist das Werkzeug somit zumindest zwei Bereiche mit jeweils den drei Abschnitten auf.

Aufgrund des dritten Abschnitts der konvex, radial abfallend zur Werkzeugachse ausgebildet ist, wird im Zentrumsbereich um die Werkzeugachse, kein durchgehender Bereich gebildet, welcher die beiden sich gegenüberliegenden Bereiche miteinander verbindet. Es wird demgegenüber eine Vertiefung durch die sich gegenüberliegenden konvex, radial abfallenden dritten Abschnitte gebildet, welche im Bereich der Werkzeugachse ihren tiefsten Punkt aufweist.

Dadurch wird vermieden, dass das Werkzeug im Zentrumsbereich einen Abschnitt aufweist, der bei Bewegung des Werkzeugs über die Oberfläche aufgrund derin der Mitte des Werkzeugs nicht vorhandenen oder nur geringfügigen Drehgeschwindigkeit keine spanende Funktion aufweisen würde. Der Abschnitt würde demnach ohne oder mit nur geringer Drehgeschwindigkeit über die zu bearbeitende Oberfläche beweget werden und zu einer möglichen Beschädigung der Oberfläche führen.

In Ausführungsformen der Erfindung ist das Werkzeug ein Fräser.

In Ausführungsformen der Erfindung ist der zweite Abschnitt im Wesentlichen senkrecht zur Werkzeugachse ausgebildet.

In Ausführungsformen der Erfindung weist der zweite Abschnitt eine Schneide, bevorzugt eine Frässchneide auf. In Ausgestaltungen weist die Frässchneide in Drehrichtung eine Neigung in radialer Richtung auf, wobei der Winkel der Neigung zwischen 0° und 90°, bevorzugt 0,5° bis 45° beträgt.

Jede Frässchneide erstreckt sich durchgehend und ohne Unterbrechungen im zweiten Abschnitt auf einer um die Werkzeugachse rotationssymmetrischen Umfangsfläche über eine axiale Länge axial zur Werkzeugachse und ist so gestaltet, dass sie bei der Fräsbewegung über ihre gesamte axiale Länge mit einer zur Werkzeugachse radialen spanenden Eingriffstiefe Werkstückspäne von der Werkstückoberfläche abhebt.

In Ausführungsformen der Erfindung weist der erste Abschnitt eine Rundung im Randbereich auf. Die Rundung ist dabei derart ausgebildet, dass diese den Eckbereich am Kopf des Werkzeugs ausbildet. Die Rundung, auch als Eckradius bezeichnet, weist beispielsweise einen Rundungsradius von 0,01 mmm bis 5 mm auf.

Zur Stabilisierung der Schneide und zur Erhöhung der Standzeit der Schneide ist es vorteilhaft die Schneidenecke zu verrunden. Beispielsweise weist die Scheidkantenverrundung einen Verrundungsradius von 0mm bis 0,05 mm auf.

In Ausführungsformen der Erfindung ist der Eckradius des ersten Abschnitts derart ausgebildet, dass diese eine über den Randbereich des Werkzeugs hinauskragende Rundung ausbildet.

In Ausführungsformen der Erfindung umfasst der zweite Abschnitt 15% - 50%, bevorzugt 20% - 40% des Bereichs. Bevorzugt umfasst der zweite Abschnitt eine Frässchneide.

In Ausführungsformen der Erfindung umfasst der dritte konvex, radial abfallende Abschnitt 25% - 85% des Bereichs.

In Ausführungsformen der Erfindung ist das Aspektverhältnis von Radius des Werkzeugs zur Tiefe in der Werkzeugachse ausgehend von der oberen Kante im zweiten Bereich zwischen 1 : 0,01 bis 1: 1, bevorzugt zwischen 1 : 0,05 bis 1:0,2.

In Ausführungsformen der Erfindung ist das Werkzeug ausgebildet aus einem Werkzeugstahl, einem Schnellarbeitsstahl oder einem Hochleistungsschnellstahl (HSS-Stahl) oder einem kobaltlegierter Hochleistungsschnellstahl (HSS-E-Stahl).

In Ausführungsformen der Erfindung ist zumindest der Schneidabschnitt des Werkzeugs ausgebildet ist aus Hartmetall, insbesondere VHM, oder aus einer Hartmetalllegierung, insbesondere P-Stahl oder K-Stahl oder Cermet, oder aus Sinterhartmetall, insbesondere aus Wolframkarbid oder Titannitrid oder Titankarbid oder Titancarbonitrid (TiCN) oder Aluminiumoxid, oder aus einer Schneidkeramik, insbesondere polykristallines Bornitrid (PKB), oder aus polykristallinem Diamant (PKD).

In Ausführungsformen weist zumindest der Fräsabschnitt eine Beschichtung auf. Diese Beschichtung liegt beispielsweise im Bereich von 0 bis 10 µm, bevorzugt 0,5 bis 5 µm. Die Beschichtung erhöht die Verschleißfestigkeit des Werkzeugs signifikant.

In Ausführungsformen der Erfindung weist der Scheidabschnitt polykristallines Bornitrid (PKB) oder aus polykristallinem Diamant (PKD) auf.

In Ausführungsformen weist die mit dem erfindungsgemäßen Werkzeug bearbeitete Oberfläche eine gemittelte Rautiefe Rz < 1,5, bevorzugt < 1,2, besonders bevorzugt <1 auf.

Die gemittelte Rautiefe Rz ist der Mittelwert aus Einzelrautiefen 5 aufeinander folgender Einzelmessstrecken im Rauheitsprofil und wird nach DIN EN ISO 1302 bestimmt. Die Extremwerte in jedem Messabschnitt werden addiert und die Spannweite durch die Anzahl der Messabschnitte dividiert.

In Ausführungsformen der Erfindung weist das Werkzeug einen Durchmesser von 3 < x <32 mm auf.

In Ausführungsformen der Erfindung ist das zu bearbeitende Werkstück ausgewählt aus Metall, Edelstahl, NE-Metalle, Stahl, Kunststoff oder Verbundwerkstoffen.

Ein weiterer Aspekt der Erfindung betrifft die Verwendung des erfindungsgemäßen Werkzeugs zur Bearbeitung von Oberflächen.

Bei einem Verfahren zum flächigen Abtragen von Material an einer Werkstückoberfläche und zum Glätten und/oder Verdichten der Werkstückoberfläche wird in weiteren Aspekten der Erfindung mittels eines Schlichtwerkzeugs nach der Erfindung, welches in einer Fräsbewegung um seine Werkzeugachse in einer vorgegebenen Drehrichtung gedreht wird und gleichzeitig in einer Vorschubbewegung relativ zur Werkstückoberfläche bewegt wird, gearbeitet

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

Nachfolgend soll die Erfindung anhand eines Ausführungsbeispiels eingehender erläutert werden. Die Ausführungsbeispiele beziehen sich auf sich auf beispielhafte Ausführungen der Erfindung und soll dabei die Erfindung beschreiben ohne diese zu beschränken.

Anhand von Zeichnungen wird die Erfindung näher erläutert. Dabei zeigen

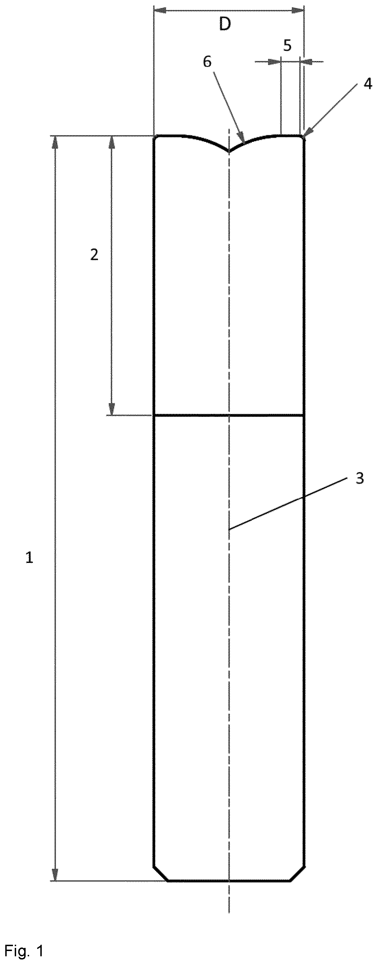

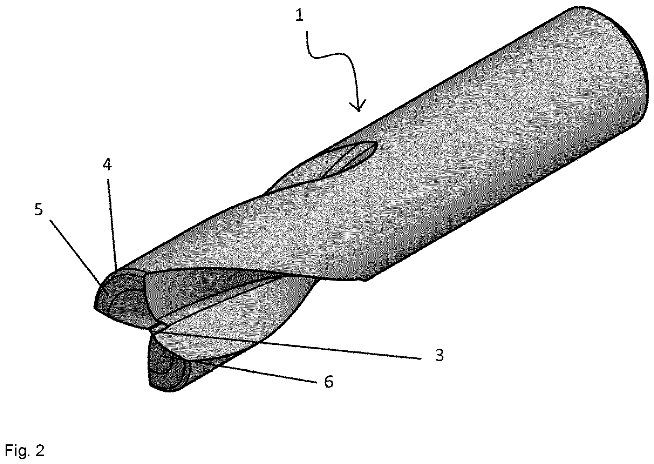

**Fig. 1** eine schematische Schnittdarstellung eines erfindungsgemäßen Werkzeugs und in **Fig. 2** eine schematische perspektivische Darstellung eines erfindungsgemäßen Werkzeugs.

In einem ersten Ausführungsbeispiel wird in den Figuren 1 und 2 ein erfindungsgemäßes Werkzeug 1 offenbart. Das Werkzeug 1 dient dabei zum flächigen Abtragen von Material an einer Oberfläche und zum Glätten und/oder Verdichten der Werkstückoberfläche in einer Fräsbewegung durch Drehung um eine Werkzeugachse 3 in einer vorgegebenen Drehrichtung bei gleichzeitigem Vorschub relativ zur Werkstückoberfläche. Das Werkzeug 1 weist dabei einen Schaftabschnitt zum Einspannen in eine Werkzeugmaschine sowie einen Schneidabschnitt 2 zur Bearbeitung der Werkstoffoberfläche auf.

Das Werkzeug 1 weist einen Durchmesser D und eine Drehachse 3 auf, welche auch die Werkzeugachse bildet.

Der Schneidabschnitt weist wenigstens zwei ausgehend von der Werkzeugachse 3 symmetrisch angeordnete Bereiche auf. Diese umfassen jeweils einen ersten, der Werkzeugachse 3 ferner liegenden Abschnitt 4, im Randbereich des Schneidabschnitts, einen zweiten Abschnitt 5 umfassend eine spanend arbeitende Frässchneide, sowie einen dritten, der Werkzeugachse 3 näher liegenden Abschnitt 6, welcher ausgehend vom zweiten Abschnitt 5 konvex, radial abfallend zur Werkzeugachse 3 ausgebildet ist, auf. Dadurch wird in der Werkzeugachse 3 der tiefste Punkt im Schneidabschnitt 2 gebildet.

Durch die konkrete Ausgestaltung, insbesondere des dritten Bereichs 6, wird in der Werkzeugmitte, also im Bereich der Werkzeugachse 3, ein offener Bereich gebildet in dem die Drehgeschwindigkeit des Werkzeugs 1 nicht oder nur geringfügig vorhanden ist. Durch den offenen Bereich wird jedoch vermieden, dass Teile des Werkzeugs 1 bei keiner oder nur wenig vorhandener Drehgeschwindigkeit die zu bearbeitende Oberfläche beschädigen, indem diese über die Oberfläche geführt werden.

In einem weiteren Ausführungsbeispiel weist das Werkzeug 1 zumindest im zweiten Abschnitt 5 des Schneidabschnitts 2 polykristallinen Diamant (PKD) auf. Dadurch wird die Verschleißfestigkeit des Werkzeugs signifikant erhöht.

In einem weiteren Ausführungsbeispiel ist das Aspektverhältnis von Radius des Werkzeugs 1 zur Tiefe in der Werkzeugachse 3 ausgehend von der oberen Kante im zweiten Bereich 5 1 : 0,1.

In einem weiteren, nicht näher dargestellten Ausführungsbeispiel ist das Werkzeug 1 als Einschneidenfräser ausgebildet. Das Werkzeug weist dabei einen Schaftabschnitt und einen Schneidabschnitt 2 sowie eine Werkzeugachse 3 als Drehachse des Werkzeugs 1 auf, wobei der Schneidabschnitt 2 einen ersten, der Werkzeugachse 3 ferner liegenden Abschnitt 4, im Randbereich des Schneidabschnitts 2, einen zweiten Abschnitt 5 umfassend eine spanend arbeitende Frässchneide, sowie einen dritten, der Werkzeugachse 3 näher liegenden Abschnitt 6, welcher ausgehend vom zweiten Abschnitt 5 konvex, radial abfallend zur Werkzeugachse 3 ausgebildet ist.

Durch die konkrete Ausgestaltung, insbesondere des dritten Bereichs 6, wird in der Werkzeugmitte, also im Bereich der Werkzeugachse 3, ein offener Bereich gebildet, in dem die Drehgeschwindigkeit des Werkzeugs 1 nicht oder nur geringfügig vorhanden ist. Durch den offenen Bereich wird jedoch vermieden, dass Teile des Werkzeugs 1 bei keiner oder nur wenig vorhandener Drehgeschwindigkeit die zu bearbeitende Oberfläche beschädigen, indem diese über die Oberfläche geführt werden.

### Bezugszeichen

- 1: Werkzeug
- 2: Schneidabschnitt
- 3: Werkzeugachse/Drehachse
- 4: erster Abschnitt
- 5: zweiter Abschnitt
- 6: dritter Abschnitt

## Patentansprüche

1. Werkzeug (1) zum flächigen Abtragen von Material an einer Oberfläche, wobei das Werkzeug (1) bestimmt ist zum flächigen Abtragen von Material an einer Werkstückoberfläche und zum Glätten und/oder Verdichten der Werkstückoberfläche in einer Bewegung durch Drehung um eine Werkzeugachse (3) in einer vorgegebenen Drehrichtung bei gleichzeitigem Vorschub relativ zur Werkstückoberfläche, aufweisend einen im Wesentlichen zylindrischen Grundkörper mit einer Drehachse (3) und einem Schaftbereich zum Einspannen des Werkzeugs in einer Bearbeitungsmaschine und einem dem Schaftabschnitt gegenüberliegenden Schneidabschnitt (2), **dadurch gekennzeichnet, dass** der Schneidabschnitt wenigstens zwei ausgehend von der Werkzeugachse (3) symmetrisch angeordnete Bereiche aufweist, jeweils umfassend:
- einen ersten, der Werkzeugachse (3) ferner liegenden Abschnitt (4), im Randbereich des Schneidabschnitts (2),
- einen zweiten Abschnitt (5) umfassend eine spanend arbeitende Schneide, sowie
- einen dritten, der Werkzeugachse (3) näher liegenden Abschnitt (6), welcher ausgehend vom zweiten Abschnitt (5) konvex, radial abfallend zur Werkzeugachse (3) ausgebildet ist.

2. Werkzeug (1) zum flächigen Abtragen von Material an einer Oberfläche, wobei das Werkzeug (1) bestimmt ist zum flächigen Abtragen von Material an einer Werkstückoberfläche und zum Glätten und/oder Verdichten der Werkstückoberfläche in einer Bewegung durch Drehung um eine Werkzeugachse (3) in einer vorgegebenen Drehrichtung bei gleichzeitigem Vorschub relativ zur Werkstückoberfläche, aufweisend einen im Wesentlichen zylindrischen Grundkörper mit einer Drehachse (3) und einem Schaftbereich zum Einspannen des Werkzeugs in einer Bearbeitungsmaschine und einem dem Schaftabschnitt gegenüberliegenden Schneidabschnitt (2), **dadurch gekennzeichnet, dass** der Schneidabschnitt wenigstens zwei ausgehend von der Werkzeugachse (3) symmetrisch angeordnete Bereiche aufweist, jeweils umfassend:
- einen ersten, der Werkzeugachse (3) ferner liegenden Abschnitt (4), im Randbereich des Schneidabschnitts (2),
- einen zweiten Abschnitt (5) umfassend eine spanend arbeitende Schneide, sowie
- einen dritten, der Werkzeugachse (3) näher liegenden Abschnitt (6), welcher ausgehend vom zweiten Abschnitt (5) konvex, radial abfallend zur Werkzeugachse (3) ausgebildet ist.

3. Werkzeug nach Anspruch 1 oder 2, **dadurch gekennzeichnet, dass** der zweite Abschnitt (5) im Wesentlichen senkrecht zur Werkzeugachse (3) ausgebildet ist.

4. Werkzeug nach einem der vorhergehenden Ansprüche, **dadurch gekennzeichnet, dass** der erste Abschnitt (4) einen Eckradius im Randbereich aufweist.

5. Werkzeug nach einem der vorhergehenden Ansprüche, **dadurch gekennzeichnet, dass** das Werkzeug (1) ausgebildet aus einem Werkzeugstahl, einem Schnellarbeitsstahl oder einem Hochleistungsschnellstahl oder einem kobaltlegierter Hochleistungsschnellstahl.

6. Werkzeug nach einem der vorhergehenden Ansprüche, **dadurch gekennzeichnet, dass** der Schneidabschnitt (2) eine Beschichtung aufweist.

7. Werkzeug nach einem der vorhergehenden Ansprüche, **dadurch gekennzeichnet, dass** der Schneidabschnitts (2) polykristallines Bornitrid oder polykristallinem Diamant aufweist.

8. Verwendung eines Werkzeugs nach einem der Ansprüche 1 bis 7 zur Bearbeitung von Oberflächen.
